# EUROPÄISCHE PATENTSCHRIFT

(11) **EP 0 867 653 B1**
(45) Veröffentlichungstag und Bekanntmachung des Hinweises auf die Patenterteilung: **23.05.2001**
(21) Anmeldenummer: 98103041.4
(22) Anmeldetag: 20.02.1998
(51) Int. Cl.: F16L 55/162, E03F 3/06

(54) **Sanierungsschale für Rohrleitungen**
Internal repair sleeve for pipes
Manchon intérieur pour la réparation de conduites

(30) Priorität: 27.03.1997 DE 29705544 U
(43) Veröffentlichungstag der Anmeldung: 30.09.1998
(73) Patentinhaber: Roos, Rainer, 85591 Vaterstetten (DE)
(72) Erfinder: Roos, Rainer, 85591 Vaterstetten (DE)
(74) Vertreter: Schlimme, Wolfram, Dr.-Ing.

(56) Entgegenhaltungen:
- EP-A- 0 413 495
- WO-A-93/18334
- WO-A-95/15460
- DE-A- 1 759 476
- DE-U- 9 313 379

## Beschreibung

Die Erfindung betrifft eine Sanierungsschale für Rohrleitungen mit einem um eine Längsachse spiralförmig gewickelten, hülsenartigen Schalungskörper, dessen erste und zweite Umfangsendabschnitte in einem Überlappungsbereich einander überlappend angeordnet sind, wobei die Sanierungsschale zwischen einem aufgewickelten Zustand und einem expandierten Zustand radial ausdehnbar ist und wobei die eine schalenartige Wandung begrenzenden axial vorderen und hinteren stirnseitigen Endkantenabschnitte des Schalungskörpers in Radialrichtung nach außen gerichtet sind.

Derartige Sanierungsschalen werden zur Reparatur von Rohrleitungen verwendet, um undichte oder anderweitig beschädigte unterirdische Rohrleitungen zur reparieren, ohne daß die Rohrleitung ausgegraben werden muß. Dazu wird die Sanierungsschale auf ein Expansionsgerät, aufgezogen und dort zunächst in ihren aufgewickelten Zustand gebracht und fixiert. Sie wird dann an ihrem Außenumfang mit einem aushärtbaren Dichtmaterial (Dichtungsmittel, Klebemittel, Harz oder Füllmittel) oder mit einem harzgetränkten Laminat versehen und in die zu sanierende Rohrleitung eingebracht. Das mit der Sanierungsschale versehene Expansionsgerät wird daraufhin in der Rohrleitung an die zu sanierende Stelle verfahren, wo die Sanierungsschale durch radiale Expansion in ihren expandierten Zustand ausgedehnt wird, in welchem sie mit dem sie umgebenden Dichtmaterial beziehungsweise Laminat an der Innenwandung der Rohrleitung anliegt und dort die schadhafte Stelle der Rohrleitung abdichtet.

Eine gattungsgemäße Sanierungsschale ist aus der EP 0 413 495 A1 bekannt. Bei dieser Sanierungsschale liegen die einander überlappenden Umfangsendabschnitte im wesentlichen an ihren nach außen gerichteten Endkantenabschnitten so aufeinander auf, daß die zwischen den jeweiligen vorderen und hinteren Endkantenabschnitten gelegenen Mittelabschnitte radial voneinander beabstandet sind. Trifft diese bekannte Sanierungsschale während der radialen Expansion auf ein Hindernis auf, beispielsweise auf einen in der Rohrleitung befindlichen Stein, auf eingedrungenes Wurzelwerk oder auf eine radial einwärts gerichtete Bruchstelle des Rohres, so kommt es zu einer punktuellen Belastung der Sanierungsschale, wodurch sich die Sanierungsschale über ihre axiale Erstreckung ungleichmäßig radial ausdehnt. Dies wiederum hat zur Folge, daß sich die einander überlappenden Umfangsendabschnitte gegeneinander verschränken, mit anderen Worten sie verschwenken jeweils um eine Schwenkachse, die im Bereich des Hindernisses etwa orthogonal auf der Längsachse der Sanierungsschale steht. Bei diesem Verschränken der einander überlappenden Umfangsendabschnitte geraten sie aus der gegenseitigen Führung, was zusätzlich dadurch erleichtert wird, daß diese gegenseitige Führung der einander überlappenden Umfangsendabschnitte bei dieser bekannten Sanierungsschale nur im Bereich der nach außen gerichteten Endkantenabschnitte erfolgt. Die Folge davon ist, daß die Umfangsendabschnitte nach dem Austreten aus der gegenseitigen Führung in Axialrichtung versetzt werden, wodurch eine optimale radiale Expansion nicht mehr möglich ist und wobei Verriegelungsmittel, wie sie aus der EP 0 413 495 A1 bekannt sind, nicht mehr wirksam werden können, so daß diese bekannte Sanierungsschale in ihrem expandierten Zustand in der Rohrleitung nicht mehr arretierbar ist.

Aus der EP 0 630 458 B1 ist eine Sanierungsschale für Rohrleitungen bekannt, die an ihren axialen Endkanten über den Umfang mit sich radial schräg nach außen erstreckenden, umfangsmäßig nebeneinander angeordneten Federlaschen versehen ist. Die Federlaschen dienen dazu, den Anpreßdruck auf die Rohrleitung zu reduzieren. Eine Führungsfunktion für die einander überlappenden Umfangsendabschnitte besitzen diese Federlaschen nicht. Sie behindern im Gegenteil sogar eine einwandfreie Relativbewegung der einander überlappenden Umfangsendabschnitte in Umfangsrichtung, falls sich eine der Federlaschen während der Relativbewegung an einer anderen Federlasche verhakt.

Aus der WO 95/15460 ist eine Sanierungsschale für Rohrleitungen bekannt, die keine in Radialrichtung nach außen gerichteten Endkantenabschnitte aufweist, bei der aber an den in Umfangsrichtung gelegenen Endkantenabschnitten Verrastungsmittel und Verrastungsgegenmittel vorgesehen sind, um die Sanierungsschale in ihrem expandierten Zustand in der Rohrleitung zu arretieren. Die bei dieser bekannten Sanierungsschale vorgesehenen Verrastungsmittel sind in einer Ausführungsform als in dem radial äußeren Umfangsendabschnitt vorgesehene Längsschlitze gebildet, in die die radial nach außen abgewinkelte Umfangsendkante des radial inneren Umfangsendabschnitts einrastet. Bei dieser Ausführungsform besteht jedoch die Gefahr, daß die radial nach außen abgewinkelte Umfangsendkante durch das Aufbringen eines hohen Expansionsdrucks plattgedrückt wird und damit nicht mehr in die Verrastungsausnehmungen eingreifen kann.

Es ist die Aufgabe der vorliegenden Erfindung, eine gattungsgemäße Sanierungsschale für Rohrleitungen anzugeben, die auch bei in Längsrichtung ungleichmäßig auftretender Last während der Expansion eine sichere Führung der einander überlappenden Umfangsendabschnitte gewährleistet.

Diese Aufgabe wird gemäß Patentanspruch 1 dadurch gelöst, daß der erste, radial äußere Umfangsendabschnitt in axialer Richtung geringfügig schmaler ausgebildet ist, als der zweite, radial innere Umfangsendabschnitt, so daß die nach außen gerichteten axialen Endkantenabschnitte zumindest im Überlappungsbereich die Umfangsendabschnitte zueinander zentrierende Führungen bilden.

Der schmaler ausgebildete radial äußere Umfangsendabschnitt liegt dabei sowohl im aufgewickelten Zustand als auch im expandierten Zustand, das heißt also während des gesamten Expansionsvorgangs, zuverlässig am radial inneren Umfangsendabschnitt an. Die beiden Umfangsendabschnitte berühren einander somit nicht nur im Bereich der nach außen gerichteten Endkanten sondern nahezu über ihre gesamte Axialerstreckung. Selbst für den Fall, daß die einander überlappenden Umfangsendabschnitte beim Auftreten einer punktuellen Last gegeneinander verschränken sollten, existiert durch ihre unterschiedliche Erstreckung in Axialrichtung im Überlappungsbereich eine Toleranz, die geringe Verschränkungen zuläßt, ohne daß die einander überlappenden Umfangsendabschnitte gegenseitig außer Eingriff geraten. Alternativ kann auch der radial innere Umfangsendabschnitt breiter ausgebildet sein und der radial äußere Umfangsendabschnitt die gleiche axiale Länge wie der mittlere Abschnitt aufweisen.

Vorteilhaft ist dabei, wenn sich der schmaler ausgebildete erste Umfangsendabschnitt in Umfangsrichtung so weit erstreckt, daß er sich im aufgewickelten Zustand der Sanierungsschale im wesentlichen vollständig im Überlappungsbereich befindet. Dies gestattet eine maximale Ausnutzung des Überlappungsbereichs und bereits im Anfangsstadium der Expansion eine zuverlässige Führung selbst dann, wenn im Anfangsstadium eine Verschränkung der Überlappungsbereiche stattfinden sollte.

Vorzugsweise ist der schmaler ausgebildete erste Umfangsendabschnitt in der geometrischen Abwicklung trapezförmig ausgestaltet, wobei die Schmalseite des Trapezes von der freien Endkante des ersten Umfangsendabschnitts gebildet ist und wobei die Abmessung der breiten Seite der axialen Länge des Mittelabschnitts der Sanierungsschale zwischen den Umfangsendabschnitten entspricht. Bei dieser Ausgestaltungsform verjüngt sich der Umfangsendabschnitt zu seinem freien Ende hin, wodurch im Anfangsstadium der radialen Expansion der Sanierungsschale eine relativ enge Führung der beiden einander überlappenden Umfangsendabschnitte erzielt wird, während mit zunehmender Expansion eine zunehmende Toleranz gegenüber einem Verschränken der Umfangsendabschnitte erreicht wird.

Vorzugsweise erstrecken sich die als Führungen ausgebildeten vorderen Endkantenabschnitte von der schalenartigen Wandung vorzugsweise mit konstanter Steigung oder Krümmung axial nach vorne und radial nach außen und ebenso erstrecken sich die als Führungen ausgebildeten hinteren Endkantenabschnitte von der schalenartigen Wandung vorzugsweise mit konstanter Steigung oder Krümmung axial nach hinten und radial nach außen.

Bei einer besonders bevorzugten Weiterbildung der erfindungsgemäßen Sanierungsschale ist zumindest einer der beiden einander überlappenden Umfangsendabschnitte mit im wesentlichen in Längsrichtung verlaufenden Rastausnehmungen versehen und der andere der beiden einander überlappenden Umfangsabschitte ist mit im wesentlichen in Längsrichtung verlaufenden Rastvorsprüngen versehen, wobei die Rastausnehmungen und die Rastvorsprünge jeweils zusammenwirkende Verrastungselemente bilden. Diese Ausführungsform der Sanierungsschale ist geeignet, nach erfolgter Expansion in ihrer radial aufgeweiteten, expandierten Stellung zu arretieren und kann somit nach erfolgter Sanierung der Rohrleitung in der Rohrleitung als zusätzliches versteifendes Element verbleiben. Sind die Verrastungselemente nicht vorgesehen, so kann die in diesem Fall nur als Verpreßwerkzeug dienende Sanierungsschale nach erfolgter Reparatur der Rohrleitung zusammen mit dem Expansionswerkzeug wieder radiusverringert werden und aus der Rohrleitung herausgezogen werden, so daß nur das ausgehärtete Dichtmaterial beziehungsweise Laminat an der Reparaturstelle in der Rohrleitung verbleibt.

Vorzugsweise sind die Rastausnehmungen im ersten, radial äußeren Umfangsendabschnitt ausgebildet, während die Rastvorsprünge im zweiten, radial inneren Umfangsendabschnitt ausgebildet sind und nach außen hervorstehen. Diese Ausgestaltungsform besitzt den Vorteil, daß die Arretierung dieser Verrastungselemente selbst dann gewährleistet bleibt, wenn ein von außen radial einwärts wirkender Druck auf die Sanierungsschale ausgeübt wird, da auch dann, wenn nicht alle Rastvorsprünge in zugeordnete Rastausnehmungen eingreifen, keine die Verrastungen lösende Hebelwirkung auftritt, wie dies beispielsweise der Fall wäre, wenn die Rastvorsprünge am radial äußeren Umfangsendabschnitt angeordnet wären und radial einwärts weisen würden. Dabei können zumindest zwei in axialer Richtung voneinander beabstandete Reihen von Verrastungselementen an einer Sanierungsschale vorgesehen sein, wobei vorzugsweise jeweils eine Reihe von Verrastungselementen dem jeweils vorderen und hinteren Endkantenabschnitt benachbart vorgesehen ist.

Vorzugsweise sind die Rastvorsprünge mit einer im wesentlichen in Umfangsrichtung verlaufenden Verstärkungssicke versehen. Die Verstärkungssicke, die jeweils als eine Art in Umfangsrichtung verlaufendes Rückgrat in einen Rastvorsprung eingeprägt ist und sich in die Wurzel des Rastvorsprungs im Umfangsendabschnitt fortsetzt, verstärkt den Rastvorsprung und verhindert, daß der Rastvorsprung beim Expansionsvorgang durch den Expansionsdruck plattgedrückt wird, bevor der Rastvorsprung in eine zugeordnete Rastausnehmung eingreifen kann.

Gemäß einer weiteren vorteilhaften Ausgestaltungsform ist die Längenausdehnung der Rastvorsprünge in axialer Richtung geringer als die Längenausdehnung der Rastausnehmungen in axialer Richtung, wodurch eine Verrastung auch dann gewährleistet bleibt, wenn sich die Umfangsendabschnitte relativ zueinander verschränken.

Vorzugsweise sind im Bereich der einander überlappenden Umfangsendabschnitte an den Endkantenabschnitten des radial inneren Umfangsendabschnitts radial nach außen hervorstehende Laschen vorgesehen, die den radial äußeren Umfangsendabschnitt an dessen vorderer beziehungsweise hinterer Endkante jeweils mit ihrem freien Ende übergreifen. Diese Laschen verhindern zusätzlich zur verschränkungstoleranten Seitenführung der Umfangsendabschnitte ein Lösen der Umfangsendabschnitte voneinander aus ihrer gegenseitigen Führung.

Bevorzugt sind die Endkantenabschnitte im Bereich der einander überlappenden Umfangsendabschnitte jeweils an ihrer in Axialrichtung von der Sanierungsschale wegweisenden Seite mit einer Markierung versehen. Diese Markierungen gestatten eine Beurteilung der relativen Lage der Umfangsendabschnitte zueinander während der Expansion der Sanierungsschale, so daß der Expansionsvorgang durch Beobachtung mittels beispielsweise einer Rohrinspektionskamera von außen kontrolliert gesteuert werden kann.

Die Erfindung wird nachfolgend anhand eines Beispiels unter Bezugnahme auf die Zeichnung näher erläutert; in dieser zeigt:
- **Fig. 1.**: eine Sanierungsschale gemäß der Erfindung in einem in die Ebene abgewickelten Zustand;
- **Fig. 2.**: eine erfindungsgemäße Sanierungsschale im montierten Zustand in der Draufsicht;
- **Fig. 3.**: eine erfindungsgemäße Sanierungsschale im montierten Zustand in der Seitenansicht entsprechend dem Pfeil III in Fig. 2; und
- **Fig. 4.**: eine Schnittansicht des Verrastungsbereichs einer montierten Sanierungsschale in Richtung der Schnittlinie IV-IV in Fig. 2.

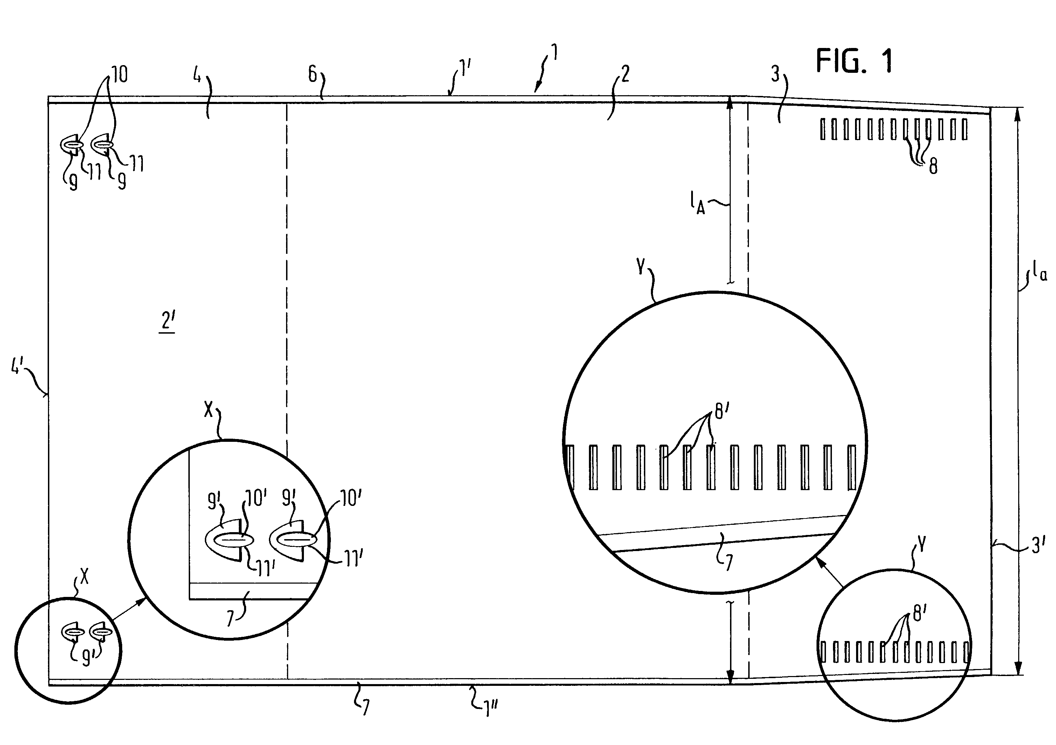

Die Fig. 1 zeigt den Schalungskörper 1 einer erfindungsgemäßen Sanierungsschale in der geometrischen Abwicklung, das heißt als ebenes Teil, bevor er in eine spiralförmig aufgewickelte hülsenartige Form gebracht wird, wo er ein schalenförmiges Werkstück mit knickloser Umfangskontur bildet.

Im Grundriß besteht der abgewickelte Schalungskörper 1 aus einem rechteckigen Mittelabschnitt 2, einem sich seitlich daran anschließenden, trapezförmigen ersten Umfangsendabschnitt 3 und einem sich an der anderen Seite des Mittelabschnitts 2 an diesen anschließenden, im wesentlichen rechteckigen zweiten Umfangsendabschnitt 4. Obwohl der Schalungskörper 1 einstückig ausgebildet ist und der Mittelabschnitt und die sich daran anschließenden Umfangsendabschnitte kontinuierlich ineinander übergehen, ist in Fig. 1 jeweils eine gestrichelt gezeichnete, gedachte Grenzlinie zwischen dem Mittelabschnitt 2 und den jeweiligen Umfangsendabschnitten 3, 4 gezeigt, um darzustellen, daß die Umfangsendabschnitte 3, 4 jeweils etwa ein Viertel der Erstreckung in Umfangsrichtung einnehmen, während der Mittelabschnitt 2 etwa die Hälfte einnimmt. Der Schalungskörper 1 besteht aus einem nichtrostenden Metallblech.

Der trapezförmig ausgestaltete erste Umfangsendabschnitt 3 besitzt im Bereich des Übergangs in den Mittelabschnitt 2 dieselbe axiale Länge l_{A} wie der Mittelabschnitt 2 und verjüngt sich dann zu seiner freien Endkante 3', deren axiale Länge lₐ geringer ist als die axiale Länger l_{A} des Mittelabschnitts 2.

Der erste Umfangsendabschnitt 3 und der zweite Umfangsendabschnitt 4 bilden einen maximalen Überlappungsbereich, in dem die beiden Umfangsendabschnitte 3, 4 einander überlappen, wenn die Sanierungsschale in einem extrem aufgewickelten Zustand ist, wie dies beispielsweise der Fall ist, wenn die Sanierungsschale an einem Expansionsgerät angebracht wird.

Während die freien Endkanten 3', 4' der Umfangsendabschnitte 3, 4 Umfangsendkanten bilden, bilden die anderen beiden Kanten des Schalungskörpers 1 axiale Endkanten 1', 1''. Im Bereich der axialen Endkanten 1', 1'' weist der Schalungskörper 1 axial vordere und axial hintere stirnseitige Endkantenabschnitte 6, 7 auf, die jeweils aus der in Fig. 1 dargestellten Zeichenebene, beispielsweise durch Bördeln, schräg nach oben abgewinkelt sind.

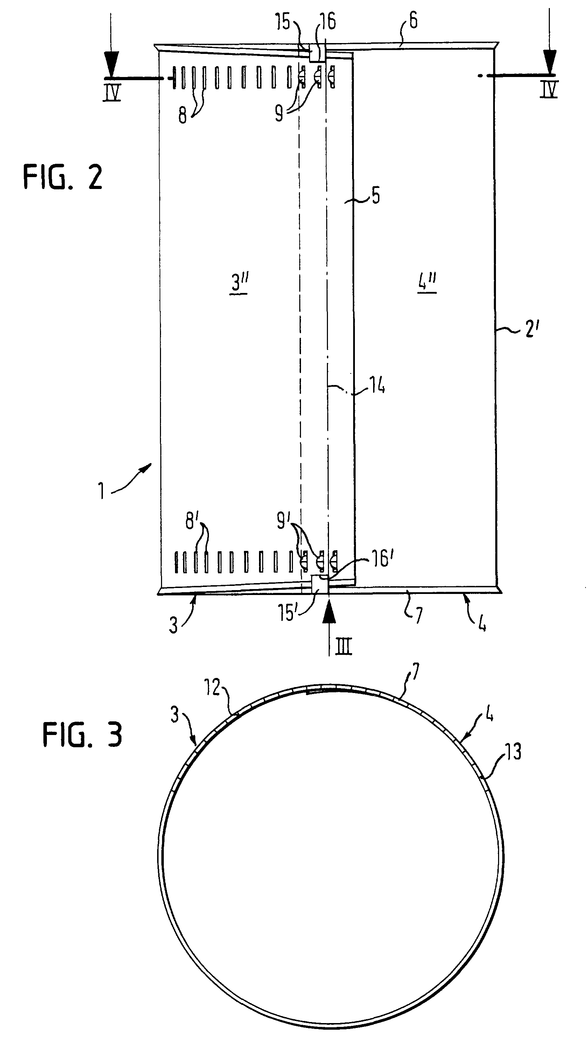

In dem in Fig. 2 dargestellten montierten Zustand der Sanierungsschale erstrecken sich die vorderen und hinteren stirnseitigen Endkantenabschnitte 6, 7 von der schalenartigen Wandung 2' nach außen und axial nach vorne beziehungsweise nach hinten, so daß, wie in Fig. 2 zu erkennen ist, vom vorderen Endkantenabschnitt 6, der schalenartigen Wandung 2' und dem hinteren Endkantenabschnitt 7 eine muldenartige Kontur gebildet wird, die zur Aufnahme und zur Festlegung einer auf die Außenseite der Sanierungsschale aufgebrachten Schicht eines Klebe-, Harz-, Füll- und/oder Dichtungsmittels beziehungsweise eines harz- oder klebergetränkten Laminats dient.

Im Bereich des ersten Umfangsendabschnitts 3 ist der Schlalungskörper 1, den axialen Endkantenabschnitten 6, 7 benachbart, mit in Axialrichtung verlaufenden Schlitzen 8, 8' versehen, wobei jeweils eine Mehrzahl von Schlitzen 8, 8' in Umfangsrichtung nebeneinander angeordnet ist. In Fig. 1 ist mit der Einzelheit Y die Reihe von Schlitzen 8' gezeigt, die dem hinteren Endkantenabschnitt 7 benachbart liegt.

Der zweite Umfangsendabschnitt 4 ist, dem vorderen Endkantenabschnitt 6 und dem hinteren Endkantenabschnitt 7 benachbart, jeweils mit einer Reihe von zahnartigen Rastvorsprüngen 9, 9' versehen, die aus der in Fig. 1 dargestellten Ebene schräg nach oben in Umfangsrichtung hervorstehen. Die in Fig. 1 gezeigte Einzelheit X zeigt zwei Rastvorsprünge 9', die dem hinteren Endkantenabschnitt 7 benachbart gelegen sind. Obwohl in Fig. 1 nur jeweils zwei in Umfangsrichtung nebeneinander angeordnete Rastvorsprünge 9, 9' dargestellt sind, können jeweils auch drei oder mehr Rastvorsprünge vorgesehen sein, wobei vorzugsweise mindestens je drei in einer Reihe angeordnete Zähne vorgesehen sind. Während des Expandierens und des damit einhergehenden Versetzens der Rastvorsprünge treten Flächenpressungskräfte auf, die von den Rastvorsprüngen aufgenommen werden müssen. Deshalb sind je nach Durchmesser beziehungsweise der zu bemessenden Kräfte die Rastvorsprünge entsprechend zu dimensionieren und in ihrer Anzahl zu bestimmen.

Die Rastausnehmungen bildenden Schlitze 8, 8' sind von den beiden axialen Endkanten 1, 1' ebensoweit wie die Rastvorsprünge 9, 9' beabstandet. Im Standardfall sind die Ratvorsprünge 9, 9' in Umfangsrichtung voneinander ebensoweit beabstandet wie die einzelnen Rastausnehmungen 8, 8' voneinander. Die Abstände können jedoch auch unterschiedlich sein für die Anpassung an nichtgenormte Rohrdurchmesser mit nicht standardisierten Rohrtoleranzen. Da die Anzahl der Rastausnehmungen 8, 8' in ihren Reihen größer ist als die Anzahl der zugeordneten Rastvorsprünge 9, 9', kann die Verrastung jeweils in verschiedenen Lagen des innenliegenden Umfangsendabschnitts 4 zu dem außenliegenden Umfangsendabschnitt 3 erfolgen, also eine Sanierungsschale mit unterschiedlichen Durchmessern hergestellt werden. Die Länge der Rastausnehmungen 8, 8' und der Rastvorsprünge 9, 9' ist generell so ausgelegt, daß in Abhängigkeit des Rohrdurchmessers der zu sanierenden Rohrleitung, der Blechdicke der Sanierungsschale sowie der auftretenden Flächenpressung während des Versetzens die Längen entsprechend dimensioniert werden.

Jeder Rastvorsprung 9, 9' ist auf seiner Oberseite, der im montierten Zustand radial außen liegenden Seite, mit einer rückgratartigen Verstärkungssicke 10, 10' versehen, die sich vom jeweiligen Rastvorsprung 9, 9' bis in dessen Wurzelbereich 11, 11' in der schalenartigen Wandung 2' fortsetzt. Die Höhe der Rastvorsprünge 9, 9' in Radialrichtung ist etwa gleich der radialen Erstreckung der Endkantenabschnitte 6, 7.

Fig. 2 zeigt die Sanierungsschale im rohrförmig um eine Längsachse 14 montierten Zustand, in dem sie bereits mittels eines Expansionsgerätes radial expandiert worden ist, wobei die Rastvorsprünge 9, 9' in die zugeordneten, Rastausnehmungen bildenden Schlitze 8, 8' eingerastet sind und dadurch verhindern, daß die Sanierungsschale wieder in einen Zustand mit geringerem Radius zurückfällt. Die dargestellte kreizylindrische Form der Sanierungsschale ist nur ein Beispiel für eine knicklose Kontur.

In Fig. 2 ist auch zu erkennen, daß der Überlappungsbereich 5, in dem sich der erste Umfangsendabschnitt 3 und der zweite Umfangsendabschnitt 2 überlappen, nur noch einen Teil der Umfangserstreckung der jeweiligen Umfangsendabschnitte 3, 4 ausmacht, da die Sanierungsschale bereits expandiert ist. Weiterhin ist in Fig. 2 zu erkennen, daß der trapezförmig verlaufende, radial äußere, erste Umfangsendabschnitt 3 im Überlappungsbereich 5 in Axialrichtung kürzer ist als der radial innere, zweite Umfangsendabschnitt 4, so daß der Mittelbereich 3'' des radial äußeren Umfangsendabschnitts 3 im wesentlichen vollflächig auf dem Mittelbereich 4'' des radial inneren Umfangsendabschnitts 4 aufliegt.

Im Bereich der einander überlappenden Umfangsendabschnitte 3, 4 sind an den Endkantenabschnitten 7 des radial inneren Umfangsendabschnitts 4 radial nach außen hervorstehende Laschen 15, 15' vorgesehen, die den radial äußeren Umfangsendabschnitt 3 an dessen vorderer beziehungsweise hinterer Endkante 6 mit ihren freien Enden 16, 16' übergreifen.

Obwohl in Fig. 2 eine symmetrisch expandierte Stellung der Sanierungsschale dargestellt ist, kann die Sanierungsschale auch asymmetrisch expandieren, wobei dann die in Fig. 2 gezeigte Seitenansicht der Sanierungsschale eine trapezförmige Außenkontur aufweist und wobei der Durchmesser der montierten Sanierungsschale im Bereich des vorderen Endkantenabschnitts 6 vom Durchmesser im Bereich des hinteren Endkantenabschnitts 7 abweicht. In einer derartigen asymmetrischen Expansionsstellung würden dann auch die Rastvorsprünge 9 im Bereich der Vorderseite in Rastausnehmungen 8 eingreifen, die gegenüber den Rastausnehmungen 8' an der Hinterseite, in welche die Rastvorsprünge 9' im Bereich der Hinterseite eingreifen, in Umfangsrichtung versetzt liegen. Die gesamte Sanierungsschale 1 würde in diesem Zustand somit die Form eines Kegelstumpfes einnehmen.

Fig. 3 stellt eine Seitenansicht der in Fig. 2 gezeigten montierten Sanierungshülse in ihrem expandierten Zustand dar. In dieser Seitenansicht ist zu erkennen, daß die Stirnseiten der hinteren Endkantenabschnitte 7, ebenso wie die nicht gezeigten Stirnseiten der vorderen Endkantenabschnitte 6, im Bereich des ersten Umfangsendabschnitts 3 sowie des zweiten Umfangsendabschnitts 4 mit Markierungen 12, 13 (zum Beispiel durch helle Farbe oder mechanische Oberflächenkennzeichnung) versehen sind. Diese Markierungen 12, 13 dienen dazu, den Grad der Expansion der Sanierungsschale 1 feststellen und damit den aktuellen Zustand der Verrastung erkennen zu können.

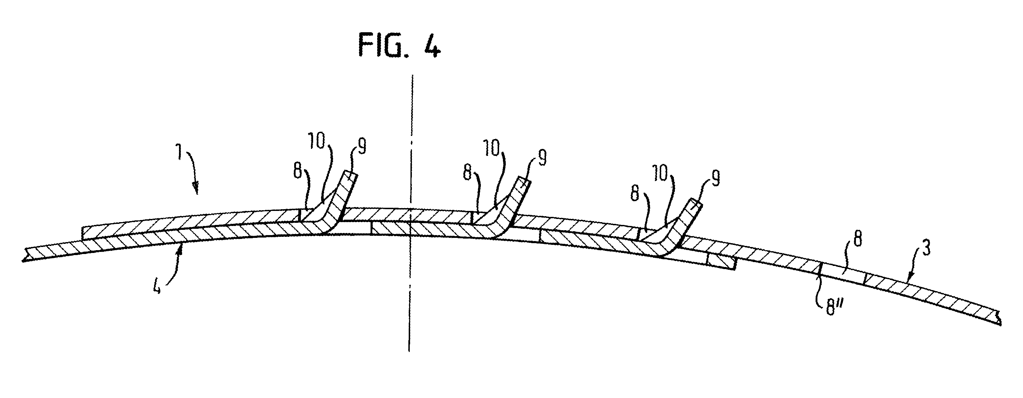

Fig. 4 stellt einen Schnitt durch die in Fig. 2 gezeigte expandierte Sanierungsschale in einer Radialebene dar. Sie zeigt in einer vergrößerten Darstellung die Verrastung der Rastvorsprünge 9 mit den Rastausnehmungen 8. In dieser Darstellung ist auch deutlich zu erkennen, daß die Rastvorsprünge 9 am radial inneren Umfangsendabschnitt 4 ausgebildet sind, während die durch Schlitze gebildeten Rastausnehmungen 8 im radial äußeren Umfangsendabschnitt 3 vorgesehen sind. Diese vergrößerte Darstellung zeigt außerdem die von jedem Rastvorsprung 9 radial nach außen weisende Verstärkungssicke 10, die einerseits verhindert, daß beim Expandieren der Sanierungsschale die Rastvorsprünge 9 aus ihrer schräg radial nach außen weisenden Stellung radial einwärts gedrückt werden, und die andererseits eine Gleitbahn bildet, auf der die radial innere, zum freien Ende weisende Kante 8'' einer jeden Rastausnehmung 8 entlanggleiten kann, um bei bereits eingerasteten Verrastungsmitteln 8, 9 ein weiteres Expandieren der Sanierungsschale zuzulassen, wobei dann die Rastvorsprünge 9 in eine in Umfangsrichtung weiter außen gelegene Rastausnehmung 8 wieder einrasten.

Um in Kunststoffrohren (PVC, PE, PEHD, etc.) eine axiale Verschiebung einer eingesetzten Sanierungsschale, zum Beispiel während eines Reinigungsvorgangs mit Hochdruckgeräten oder während des kontinuierlichen Flüssigkeitslaufs, zu vermeiden, sind zusätzliche Verankerungsmaßnahmen erforderlich. Die herkömmliche Verankerung ähnlicher Systeme erfolgt mit nach außen gestanzten Domen (spitzen- oder schneidenartigen Vorsprüngen). Der Nachteil hierbei besteht darin, daß durch enormen Kraftaufwand der Metallkörper in das Kunststoffrohr eingepreßt werden muß. Bei Duroplasten (zum Beispiel PVC) wird durch diesen Vorgang das Rohr zerstört. Bei weicheren Kunststoffen wie zum Beispiel PE, liegt der Nachteil in der entstehenden großen Hinterläufigkeit (Spaltbreite zwischen der Rohrinnenwandung und dem Schalungskörper der Sanierungsschale, hervorgerufen durch die radiale Höhe der Dome. Mit der erfindungsgemäßen Sanierungsschale wird jedoch bei sämtlichen Flüssigkeitsrohren im Kunststoffbereich eine wirksame Verankerung gewährleistet, ohne daß dabei eine Hinterläufigkeit verursacht wird. Im vorliegenden Fall werden der Sanierungsschale wahlweise am gesamten Umfang linear oder nur punktuell geeignete, im Wasser aushärtende Harze und/oder spezielle Klebemassen aufgespachtelt. Diese gehen mit dem entsprechenden Edelstahl-Schalenmaterial eine feste Oberflächenverbindung ein. Zusätzlich ist der aufgespachtelte Belag zwischen den Endkantenabschnitten axial fixiert und gekammert. Die Endkantenabschnitte, welche sich an die Rohrleitungskontur anschmiegen, wirken dadurch auch einer Hinterläufigkeit entgegen. An der entsprechenden Position in der zu sanierenden Rohrleitung angelangt, wird während des Expandierens das aufgespachtelte Material in die vorliegende(n) Schadstelle(n) beziehungsweise in die bei Drainageleitungen bereits vorhandenen Drainageöffnungen oder in die Muffespalte eingepreßt. Nach dem Aushärten des aufgespachtelten Materials wirkt dieses als besonders stabile, axiale Punkt-, Linien- und/oder Flächenverankerung für die Sanierungsschale.

Anstelle des im vorgenannten Beispiel trapezförmig verlaufenden radial äußeren Umfangsendabschnitts 3 kann dieser auch auf seiner im wesentlichen gesamten Erstreckung in Umfangsrichtung gleichmäßig schmaler ausgebildet sein, also beispielsweise mit der gleichbleibenden axialen Abmessung lₐ, als der Mittelabschnitt 2 mit seiner axialen Abmessung l_{A}.

## Patentansprüche

1. Sanierungsschale für Rohrleitungen mit einem um eine Längsachse (14) spiralförmig gewickelten, hülsenartigen Schalungskörper (1), dessen erste und zweite Umfangsendabschnitte (3, 4) in einem Überlappungsbereich (5) einander überlappend angeordnet sind,
- wobei die Sanierungsschale zwischen einem aufgewickelten Zustand und einem expandierten Zustand radial ausdehnbar ist und
- wobei die eine schalenartige Wandung (2') begrenzenden axial vorderen und hinteren stirnseitigen Endkantenabschnitte (6, 7) des Schalungskörpers (1) in Radialrichtung nach außen gerichtet sind,
dadurch **gekennzeichnet,**
- daß der erste, radial äußere Umfangsendabschnitt (3) in axialer Richtung geringfügig schmaler ausgebildet ist als der zweite, radial innere Umfangsendabschnitt (4), so daß die nach außen gerichteten axialen Endkantenabschnitte (6, 7) zumindest im Überlappungsbereich (5) die Umfangsendabschnitte (3, 4) zueinander zentrierende Führungen bilden.

2. Sanierungsschale nach Anspruch 1,
dadurch **gekennzeichnet,**
daß sich der schmaler ausgebildete erste Umfangsendabschnitt (3) in Umfangsrichtung so weit erstreckt, daß er sich im aufgewickelten Zustand der Sanierungsschale im wesentlichen vollständig im Überlappungsbereich (5) befindet.

3. Sanierungsschale nach Anspruch 1 oder 2,
dadurch **gekennzeichnet,**
daß der schmaler ausgebildete erste Umfangsendabschnitt (3) in der geometrischen Abwicklung trapezförmig ausgestaltet ist, wobei die Schmalseite des Trapezes von der freien Endkante (3') des ersten Umfangsendabschnitts (3) gebildet ist und wobei die Abmessung der breiten Seite der axialen Länge des Mittelabschnitts (2) der Sanierungsschale zwischen den Umfangsendabschnitten (3, 4) entspricht.

4. Sanierungsschale nach Anspruch 1, 2 oder 3,
dadurch **gekennzeichnet,**
- daß sich die als Führungen ausgebildeten vorderen Endkantenabschnitte (6) von der schalenartigen Wandung (2') vorzugsweise mit konstanter Steigung oder Krümmung axial nach vorne und radial nach außen erstrecken und
- daß sich die als Führungen ausgebildeten hinteren Endkantenabschnitte (7) von der schalenartigen Wandung (2') vorzugsweise mit konstanter Steigung oder Krümmung axial nach hinten und radial nach außen erstrecken.

5. Sanierungsschale nach einem der vorhergehenden Ansprüche,
dadurch **gekennzeichnet,**
- daß zumindest eine der beiden einander überlappenden Umfangsendabschnitte (3, 4) mit im wesentlichen in Längsrichtung verlaufenden Rastausnehmungen (8, 8') versehen ist und
- daß der andere der beiden einander überlappenden Umfangsendabschnitte (4, 3) mit im wesentlichen in Längsrichtung verlaufenden Rastvorsprüngen (9, 9') versehen ist,
- wobei die Rastausnehmungen (8, 8') und die Rastvorsprünge (9, 9') jeweils zusammenwirkende Verrastungselemente bilden.

6. Sanierungsschale nach Anspruch 5,
dadurch **gekennzeichnet,**
daß die Rastausnehmungen (8, 8') im ersten, radial äußeren Umfangsendabschnitt (3) ausgebildet sind und daß die Rastvorsprünge (9, 9') im zweiten, radial inneren Umfangsendabschnitt (4) ausgebildet sind und nach außen hervorstehen.

7. Sanierungsschale nach Anspruch 6,
dadurch **gekennzeichnet,**
daß die Rastvorsprünge (9, 9') mit einer im wesentlichen in Umfangsrichtung verlaufenden Verstärkungssicke (10, 10') versehen sind.

8. Sanierungsschale nach einem der Ansprüche 5 bis 7,
dadurch **gekennzeichnet,**
daß die Längenausdehnung der Rastvorsprünge (9, 9') in axialer Richtung geringer ist als die Längenausdehnung der Rastausnehmungen (8, 8') in axialer Richtung.

9. Sanierungsschale nach einem der vorhergehenden Ansprüche,
dadurch **gekennzeichnet,**
daß im Bereich der einander überlappenden Umfangsendabschnitte (3, 4) an den Endkantenabschnitten (7) des radial inneren Umfangsendabschnitts (4) radial nach außen hervorstehende Laschen (15, 15') vorgesehen sind, die den radial äußeren Umfangsendabschnitt (3) an dessen vorderer beziehungsweise hinterer Endkante (6) mit ihren freien Enden (16, 16') übergreifen.

10. Sanierungsschale nach einem der vorhergehenden Ansprüche,
dadurch **gekennzeichnet**,
daß die Endkantenabschnitte (6, 7) im Bereich der einander überlappenden Umfangsendabschnitte (3, 4) jeweils an ihrer in Axialrichtung von der Sanierungsschale weg weisenden Seite mit einer Markierung (12, 13) versehen sind.

## Claims

1. Repair lining for pipes comprising a sleeve-like lining body (1), which is wound spirally around a longitudinal axis (14) and of which first and second peripheral end portions (3, 4) are disposed so as to overlap one another in an overlap region (5),
- wherein the repair lining is radially expandable between a coiled state and an expanded state and
- wherein the end edge portions (6, 7) of the lining body (1), which lie at the axially front and rear end and delimit a lining-like wall (2'), are directed radially outwards,
characterized in
- that the first, radially outer peripheral end portion (3) is constructed so as to be axially slightly narrower than the second, radially inner peripheral end portion (4) so that the outwardly directed axial end edge portions (6, 7) at least in the overlap region (5) form guides, which centre the peripheral end portions (3, 4) relative to one another.

2. Repair lining according to claim 1,
characterized in
that the narrower first peripheral end portion (3) extends far enough in peripheral direction for it to be situated, in the coiled state of the repair lining, substantially completely in the overlap region (5).

3. Repair lining according to claim 1 or 2,
characterized in
that the narrower first peripheral end portion (3) in geometric development is trapezoidal, wherein the narrow side of the trapezium is formed by the free end edge (3') of the first peripheral end portion (3) and wherein the dimension of the broad side corresponds to the axial length of the middle portion (2) of the repair lining between the peripheral end portions (3, 4) .

4. Repair lining according to claim 1, 2 or 3,
characterized in
- that the front end edge portions (6) of the lining-like wall (2'), which are constructed as guides, preferably extend with a constant slope or curvature in an axially forward and radially outward direction and
- that the rear end edge portions (7) of the lining-like wall (2'), which are constructed as guides, preferably extend with a constant slope or curvature in an axially rearward and radially outward direction.

5. Repair lining according to one of the preceding claims,
characterized in
- that at least one of the two mutually overlapping peripheral end portions (3, 4) is provided with detent recesses (8, 8'), which extend substantially in longitudinal direction, and
- that the other of the two mutually overlapping peripheral end portions (4, 3) is provided with detent projections (9, 9'), which extend substantially in longitudinal direction,
- wherein the detent recesses (8, 8') and the detent projections (9, 9') form in each case cooperating latching elements.

6. Repair lining according to claim 5,
characterized in
that the detent recesses (8, 8') are formed in the first, radially outer peripheral end portion (3) and that the detent projections (9, 9') are formed in the second, radially inner peripheral end portion (4) and project outwards.

7. Repair lining according to claim 6,
characterized in
that the detent projections (9, 9') are provided with a reinforcing bead (10, 10'), which extends substantially in peripheral direction.

8. Repair lining according to one of claims 5 to 7,
characterized in
that the linear extent of the detent projections (9, 9') in axial direction is smaller than the linear extent of the detent recesses (8, 8') in axial direction.

9. Repair lining according to one of the preceding claims,
characterized in
that in the region of the mutually overlapping peripheral end portions (3, 4) on the end edge portions (7) of the radially inner peripheral end portion (4) there are provided radially outward projecting tongues (15, 15'), which engage with their free ends (16, 16') over the radially outer peripheral end portion (3) at its front and rear end edge (6) respectively.

10. Repair lining according to one of the preceding claims,
characterized in
that the end edge portions (6, 7) in the region of the mutually overlapping peripheral end portions (3, 4) are provided in each case at their side directed axially away from the repair lining with a marking (12, 13).

## Revendications

1. Manchon de réparation pour conduites tubulaires, comprenant un corps de manchon (1) en forme de douille, enroulé en spirale autour d'un axe longitudinal (14), dont le premier et le deuxième tronçon d'extrémité périphérique (3, 4) sont agencés en chevauchement mutuel dans une zone de chevauchement (5),
- le manchon de réparation étant radialement extensible entre un état enroulé et un état en expansion, et
- les tronçons d'arête terminale du côté axialement antérieur et du côté axialement postérieur, qui délimitent une paroi (2') en forme de manchon, du corps de manchon (1) sont dirigés en direction radiale vers l'extérieur,
caractérisé en ce que
le premier tronçon d'extrémité périphérique (3), radialement extérieur, est réalisé en direction axiale légèrement plus étroit que le deuxième tronçon d'extrémité périphérique (4), radialement intérieur, de sorte que les tronçons d'arête terminale dirigés axialement vers l'extérieur (6, 7) forment, au moins dans la zone de chevauchement (5), des guidages qui centrent les tronçons d'extrémité périphérique (3, 4) l'un par rapport à l'autre.

2. Manchon de réparation selon la revendication 1,
caractérisé en ce que le premier tronçon d'extrémité périphérique (3) réalisé plus étroit, s'étend en direction périphérique aussi loin que, dans l'état enroulé du manchon de réparation, il se trouve sensiblement entièrement dans la zone de chevauchement (5).

3. Manchon de réparation selon l'une ou l'autre des revendications 1 et 2,
caractérisé en ce que le premier tronçon d'extrémité périphérique (3) réalisé plus étroit est conçu sous forme trapézoïdale en développement géométrique, et en ce que le petit côté du trapèze est formé par l'arête terminale libre (3') du premier tronçon d'extrémité périphérique (3), et la dimension du grand côté correspond à la longueur axiale du tronçon central (2) du manchon de réparation entre les tronçons d'extrémité périphériques (3, 4).

4. Manchon de réparation selon l'une des revendications 1,2 et 3,
caractérisé en ce que :
- les tronçons d'arête terminale (6) antérieurs réalisés sous forme de guidage s'étendent axialement vers l'avant et radialement vers l'extérieur depuis la paroi en forme de manchon (2'), de préférence avec une pente constante ou sous forme incurvée, et
- les tronçons d'arête terminale (7) postérieurs réalisés sous forme de guidage s'étendent axialement vers l'arrière est radialement vers l'extérieur depuis la paroi en forme de manchon (2'), de préférence avec une pente constante ou sous forme incurvée.

5. Manchon de réparation selon l'une des revendications précédentes,
caractérisé en ce que :
- l'un au moins des deux tronçons d'extrémité périphériques en chevauchement mutuel (3, 4) est pourvu d'évidements d'enclenchement (8, 8') qui s'étendent sensiblement en direction longitudinale, et
- l'autre des deux tronçons d'extrémité périphériques en chevauchement mutuel (4, 3) est pourvu de saillies d'enclenchement (9, 9') qui s'étendent sensiblement en direction longitudinale,
de sorte que les évidements d'enclenchement (8, 8') et les saillies d'enclenchement (9, 9') constituent respectivement des éléments d'enclenchement coopérants.

6. Manchon de réparation selon la revendication 5,
caractérisé en ce que les évidements d'enclenchement (8, 8') sont réalisés dans le premier tronçon d'extrémité périphérique radialement extérieur (3), et ce que les saillies d'enclenchement (9, 9') sont réalisées dans le deuxième tronçon d'extrémité périphérique radialement intérieur (4) et dépassent vers l'extérieur.

7. Manchon de réparation selon la revendication 6,
caractérisé en ce que les saillies d'enclenchement (9, 9') sont pourvues de moulures de renfort (10, 10') qui s'étendent sensiblement en direction périphérique.

8. Manchon de réparation selon l'une des revendications 5 à 7,
caractérisé en ce que l'extension longitudinale des saillies d'enclenchement (9, 9') en direction axiale est plus faible que l'extension longitudinale des évidements d'enclenchement (8, 8') en direction axiale.

9. Manchon de réparation selon l'une des revendications précédentes,
caractérisé en ce que dans la région des tronçons d'extrémité périphériques en chevauchement mutuel (3, 4) sont prévues des pattes (15, 15') qui dépassent radialement vers l'extérieur au niveau des tronçons d'arête terminale (7) du tronçon d'extrémité périphérique radialement intérieur (4), lesdites pattes coiffant le tronçon d'extrémité périphérique radialement extérieur (3) au niveau de son arête terminale (6) antérieure, respectivement postérieure, par leurs extrémités libres (16, 16').

10. Manchon de réparation selon l'une des revendications précédentes,
caractérisé en ce que les tronçons d'arête terminale (6, 7) sont pourvus, dans la région des tronçons d'extrémité périphérique en chevauchement mutuel (3,4), d'un marquage (12, 13) sur leur côté respectif détourné en direction axiale depuis le manchon de réparation.
